# FASCICULE DE BREVET EUROPEEN

(11) **EP 4 331 867 B1**
(45) Date de publication et mention de la délivrance du brevet: **12.03.2025**
(21) Numéro de dépôt: 22192685.0
(22) Date de dépôt: 29.08.2022
(51) Int. Cl.: B60C 7/14, B60C 7/10, B60C 7/24

(54) **ROUE DÉFORMABLE A SUPPORT DE CHARGE NON-PNEUMATIQUE POUR DES CONDITIONS LUNAIRES ET MARTIENNES**
VERFORMBARES RAD MIT NICHT-PNEUMATISCHER LASTAUFNAHME FÜR BEDINGUNGEN WIE AUF DEM MOND UND DEM MARS
DEFORMABLE WHEEL WITH NON-PNEUMATIC LOAD SUPPORT FOR CONDITIONS ON THE MOON AND MARS

(43) Date de publication de la demande: 06.03.2024
(73) Titulaire: Venturi Lab SA, 1720 Corminboeuf (CH)
(72) Inventeur: DELFINO, Antonio, 1720 CORMINBOEUF (CH); OLSOMMER, David F., 1720 CORMINBOEUF (CH)
(74) Mandataire: Cabinet Beau de Loménie

(56) Documents cités:
- WO-A1-2018/060578
- CN-A- 109 720 148
- FR-A3- 3 090 498
- JP-A- H 082 204
- US-A1- 2016 096 400
- US-A1- 2021 070 106

## Description

### Arrière-plan de l'invention

La présente invention concerne une roue déformable à support de charge non-pneumatique. Plus particulièrement, l'invention concerne une roue qui supporte une charge avec ses composants structurels et qui a des capacités de performance adaptées à équiper un véhicule destiné à rouler dans des conditions extrêmes comme celles rencontrées sur la Lune et sur Mars.

La roue pneumatique possède des capacités de support de charge, d'absorption des chocs de la route et de transmission de force (accélérations, arrêts et changements de direction) qui sont particulièrement bien adaptées à de nombreux véhicules, notamment les bicyclettes, les motocyclettes, les automobiles et les camions. Les capacités d'absorption des chocs des pneumatiques sont également utiles dans d'autres applications, par exemple pour les chariots transportant des équipements médicaux ou du matériel électronique sensible.

Des alternatives à la roue pneumatique existent. On pourra par exemple citer les pneus pleins et les pneus à ressorts. Toutefois, ces alternatives ne présentent pas les avantages de performance des roues pneumatiques. En particulier, les pneus pleins reposent sur la compression de la partie en contact avec le sol pour supporter la charge. Ce type de pneus peut être lourd et rigide et n'a pas la capacité d'absorption des chocs des roues pneumatiques. Lorsqu'elles sont rendues plus élastiques, les roues non pneumatiques conventionnelles n'ont pas le support de charge ou l'endurance des roues pneumatiques.

Pour remédier à ces inconvénients, la publication US 7,418,988 propose un pneu à support structurel qui comprend une bande annulaire extérieure et une pluralité de rayons s'étendant transversalement et radialement vers l'intérieur depuis la bande annulaire jusqu'au moyeu de la roue et destinés à transmettre en tension les forces de charge entre la bande annulaire et le moyeu.

La roue structurellement supportée selon cette invention ne comporte pas de cavité destinée à contenir de l'air sous pression et n'a donc pas besoin de disposer d'un joint avec la jante de la roue pour conserver la pression d'air interne. Cette roue à support structurel ne nécessite donc pas de pneu au sens où on l'entend.

Les rayons de cette roue agissent en tension pour transmettre les forces de charge entre la roue et la bande annulaire, ce qui permet notamment de supporter la masse d'un véhicule. Les forces de support sont générées par la tension des rayons qui ne sont pas reliés à la partie de la bande annulaire en contact avec le sol. Les rayons transmettent également les forces requises pour l'accélération, l'arrêt et les virages.

Quelles que soient les alternatives connues de l'art antérieur pour la réalisation de roues non pneumatiques, celles-ci ne donnent généralement pas entière satisfaction, notamment lorsqu'elles sont destinées à rouler dans des conditions extrêmes comme celles rencontrées sur la Lune et sur Mars. En effet, avec de telles conditions, il est nécessaire que la roue puisse se déformer fortement au passage d'un obstacle tout en générant une pression de contact qui soit faible et uniforme pour permettre au véhicule de rester mobile sur un sol meuble tel que le sol que l'on rencontre sur la Lune et sur Mars.

La publication WO 2018/060578 décrit une roue selon le préambule de la revendication 1.

### Objet et résumé de l'invention

La présente invention a donc pour but principal de pallier de tels inconvénients en proposant une structure de roue déformable à support de charge non-pneumatique qui puisse notamment équiper des véhicules destinés à rouler dans des conditions extrêmes comme celles rencontrées sur la lune et sur Mars.

Conformément à l'invention, ce but est atteint grâce à une roue déformable à support de charge non-pneumatique selon la revendication 1.

La roue selon l'invention est remarquable notamment du fait de la présence de la bande annulaire lamifiée qui comprend une pluralité de viroles concentriques qui sont assemblées avec interposition de couches d'interposition composées chacune d'un matériau dont le module de Young est de 600000 à 1000 fois inférieur à celui des viroles, par exemple en matériau élastomère. Sous une charge appliquée de l'extérieur, la partie de la bande lamifiée en contact avec le sol se déforme, non pas sous une forme essentiellement circulaire, mais sous une forme épousant la surface du sol tout en maintenant une longueur essentiellement constante des viroles. Le déplacement relatif des viroles de la bande lamifiée se produit par cisaillement dans les couches d'interposition. La roue selon l'invention permet ainsi de générer une pression de contact qui soit faible et uniforme au sol. De la sorte, le véhicule équipé de telles roues peut rester mobile (c'est-à-dire qu'il ne s'ensable pas) même sur un sol meuble (de type sable) tel que rencontré sur la Lune et sur Mars.

La roue selon l'invention est également remarquable par l'utilisation de câbles métalliques reliant radialement le moyeu à la bande lamifiée avec une fixation au moyeu par l'intermédiaire d'un organe élastique permettant d'en moduler la raideur radiale. En particulier, grâce à leurs caractéristiques intrinsèques et à la présence des organes élastiques, les câbles métalliques présentent une faible rigidité en compression et une importante rigidité en traction, ce qui permet aux câbles fixés à la bande lamifiée qui sont en contact avec le sol de se courber pour absorber les chocs de la route et de parfaitement conformer la bande lamifiée aux irrégularités de la surface de la route, notamment en cas de passage d'un obstacle.

De manière plus générale, la roue selon l'invention ainsi constituée présente l'avantage de générer des efforts de traction importants et sans glissement notamment lorsque le véhicule équipé de telles roues emprunte une pente. Par ailleurs, la roue selon l'invention permet de disposer d'un rapport de charge portée sur masse de la roue compris entre 15 et 25.

De préférence, les viroles de la bande lamifiée sont réalisées en métal ou en matériau composite.

De préférence également, les couches d'interposition sont composées d'un élastomère hyperélastique ayant une température de transition vitreuse inférieure à 120°C.

De façon avantageuse, les câbles possèdent un rapport entre leur raideur mécanique en traction et leur raideur mécanique en compression qui est compris entre 50000 et 300000, et de préférence entre 25000 et 150000.

Selon une autre disposition avantageuse, chaque câble est incliné par rapport à un plan radial au moyeu d'un angle alpha compris entre 0,1° et 45° - et de préférence égal à 10° - et/ou par rapport à un plan transversal au moyeu d'un angle beta compris entre 0,1° et 45° - et de préférence égal à 10°. Ce non alignement des câbles avec des directions radiales permet d'augmenter la rigidité de la roue lorsqu'elle est sollicitée latéralement (par exemple dans un virage) ou lorsque le véhicule freine.

L'extrémité extérieure des câbles peut être fixée sur des baguettes montées contre une surface extérieure de la bande lamifiée.

Selon un mode de réalisation, l'extrémité intérieure des câbles est fixée au moyeu par l'intermédiaire de ressorts à lame permettant de moduler leur raideur radiale.

Dans ce mode de réalisation, les ressorts à lame peuvent être fixés au niveau de leur centre respectif contre une surface intérieure du moyeu formant la butée apte à limiter leur déformation et s'étendent longitudinalement selon une direction circonférentielle au moyeu, chaque ressort à lame comprenant deux extrémités longitudinales opposées qui sont chacune reliée à l'extrémité intérieure d'un câble.

De plus, toujours dans ce mode de réalisation, la roue peut comprendre une pluralité de ressorts à lame qui sont fixés contre la surface intérieure du moyeu du côté interne de la roue, et une pluralité de ressorts à lame qui sont fixés contre la surface intérieure du moyeu du côté externe de la roue.

De préférence, chaque ressort à lame comprend une pluralité de lames en acier inoxydable qui sont superposées les unes aux autres.

Toujours dans ce mode de réalisation, le moyeu peut porter au moins un disque faisant saillie radialement vers l'extérieur et ayant un diamètre extérieur contre lequel la surface intérieure de la bande lamifiée est apte à venir en butée afin de limiter les déformations de celle-ci.

Selon un autre mode de réalisation, l'extrémité intérieure des câbles est fixée au moyeu par l'intermédiaire de lames pliées en U formant un ressort permettant de moduler la raideur radiale des câbles.

Dans cet autre mode de réalisation, les lames pliées en U peuvent être fixées au niveau de leurs extrémités libres respectives contre une surface intérieure du moyeu et s'étendre longitudinalement selon une direction axiale du moyeu, chaque lame pliée en U étant reliée à l'extrémité intérieure d'un câble.

De préférence, la roue comprend une pluralité de lames pliées en U qui s'étendent longitudinalement du côté interne de la roue, et une pluralité de lames pliées en U qui s'étendent longitudinalement du côté externe de la roue.

Toujours dans cet autre mode de réalisation, le moyeu peut porter au moins un disque faisant saillie radialement vers l'extérieur et ayant un diamètre intérieur contre lequel les lames pliées en U sont aptes à venir en butée afin de limiter leur déformation, et un diamètre extérieur contre lequel la surface intérieure de la bande lamifiée est apte à venir en butée afin de limiter les déformations de celle-ci.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et en perspective d'une roue selon un premier mode de réalisation de l'invention ;
- la figure 2 est une vue schématique et de face de la roue de la figure 1 en élévation ;
- la figure 3 est une vue schématique et de face de la roue de la figure 1 reposant sur le sol et soumise à une charge ;
- la figure 4 est une vue en coupe selon IV-IV de la figure 2 ;
- les figures 5 et 6 sont des vues schématiques et selon deux perspectives différentes d'une roue selon un second mode de réalisation de l'invention ;
- la figure 7 est une vue schématique et de face de la roue des figures 5 et 6 en élévation ;
- la figure 8 est une vue schématique et de face de la roue des figures 5 et 6 reposant sur le sol et soumise à une charge ;
- la figure 9 est une vue en coupe selon IX-IX de la figure 7 ; et
- la figure 10 est une vue schématique et de face de la roue des figures 5 et 6 au passage d'un obstacle important

### Description détaillée de modes de réalisation

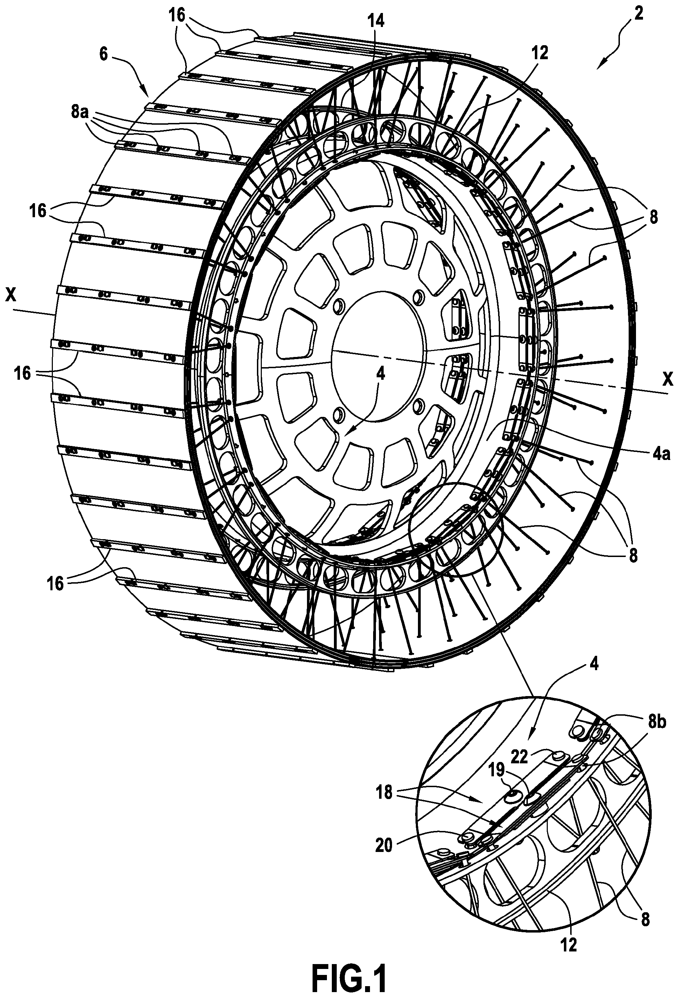

L'invention concerne une roue déformable à support de charge non-pneumatique telle que représentée sur la figure 1 qui est adaptée à équiper un véhicule destiné à rouler dans des conditions extrêmes comme celles rencontrées sur la Lune et sur Mars.

La roue 2 représentée sur la figure 1 comprend principalement un moyeu 4, une bande annulaire lamifiée 6 destinée à être en contact avec le sol, et une pluralité de câbles métalliques 8 reliant radialement le moyeu à la bande lamifiée.

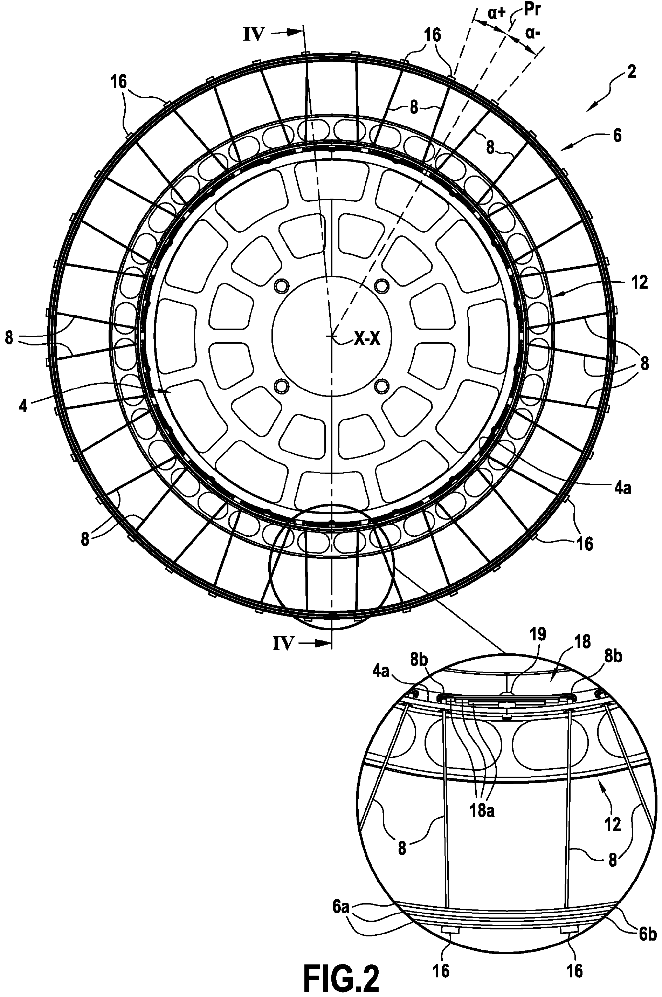

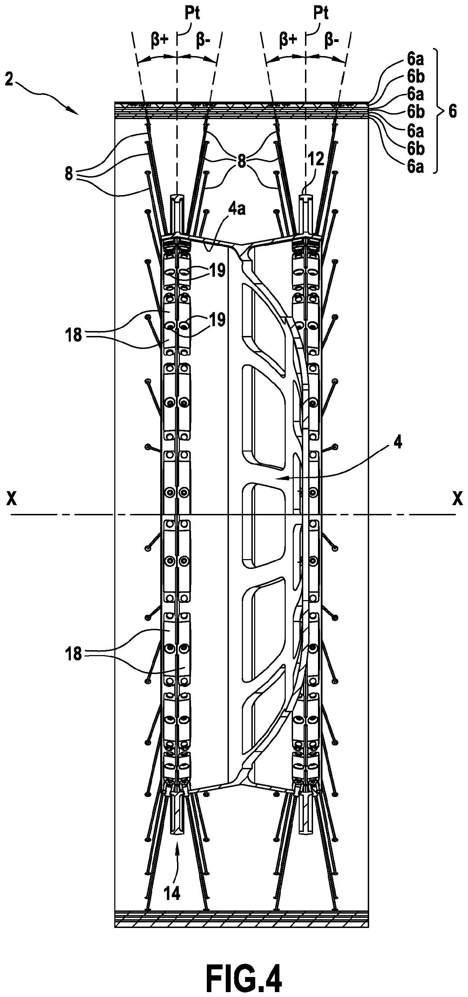

Comme représenté sur les figures 2 et 4, la bande lamifiée 6 se compose d'une pluralité de viroles concentriques 6a qui sont assemblées entre elles en prenant en sandwich des couches d'interposition 6b composées chacune d'un matériau dont le module de Young est de 600000 à 1000 fois inférieur à celui des viroles.

Les viroles 6a peuvent être métalliques (par exemple en acier) ou réalisées en matériau composite.

Quant aux couches d'interposition 6b, elles sont avantageusement réalisées en un élastomère hyperélastique ayant une température de transition vitreuse inférieure à 120°C.

Grâce à une telle composition de la bande lamifiée 6, la partie de la bande lamifiée qui est en contact avec le sol se déforme sous une charge appliquée de l'extérieur mais sous une forme épousant la surface du sol tout en maintenant une longueur essentiellement constante des viroles 6a qui la composent. Le déplacement relatif des viroles de la bande lamifiée se produit par cisaillement dans les couches d'interposition 6b.

Comme représenté notamment sur la figure 1, le moyeu 4 de la roue porte deux disques 12, 14 qui font saillie radialement vers l'extérieur. Ces deux disques 12, 14 sont espacés l'un de l'autre selon l'axe X-X de la roue et présentent chacun un diamètre extérieur contre lequel la surface intérieure de la bande lamifiée 6 est apte à venir en butée afin de limiter les déformations de celle-ci.

Les câbles 8 viennent relier radialement la bande lamifiée 6 au moyeu 4. A cet effet, chaque câble 8 comprend une extrémité extérieure 8a qui est fixée sur des baguettes 16 elles-mêmes montées contre une surface extérieure de la bande lamifiée.

Dans cette configuration, les extrémités extérieures 8a des câbles traversent l'ensemble des viroles 6a et couches d'interposition 6b de la bande lamifiée. Bien entendu, il est possible d'envisager que les extrémités extérieures 8a des câbles soient fixées sur la surface intérieure de la bande lamifiée.

Au niveau de leur extrémité intérieure respective, les câbles 8 sont fixés sur le moyeu 4 par l'intermédiaire d'un organe élastique 18 permettant de moduler la raideur radiale des câbles. Ici également, les extrémités intérieures 8b des câbles traversent le moyeu dans son épaisseur.

Chaque câble 8 est composé par un assemblage de fils métalliques (par exemple en acier) constitués en torons, eux-mêmes rassemblés autour d'une âme métallique. A titre d'exemple, chaque câble comporte 6 ou 7 torons composés chacun de 7 à 61 fils métalliques, l'ensemble présentant un diamètre externe compris entre 0,2 mm et 5 mm.

De plus, chaque câble 8 possède un rapport entre sa raideur mécanique en traction Kt et sa raideur mécanique en compression Kc qui est compris entre 50000 et 300000 (i.e. 5000 ≤ Kt/Kc ≤ 300000), et de préférence compris entre 25000 et 150000 (i.e. 25000 ≤ Kt/Kc ≤ 150000).

Ces valeurs de raideur mécanique Kt et Kc ont été obtenues en suivant les recommandations des normes ISO 2408 :2017 et ISO 17893 :2004 (relatives aux exigences des câbles en acier) et en utilisant une machine d'essais de la marque « INSTRON^{®} », modèle 34TM-10.

En d'autres termes, les câbles 8 présentent une asymétrie de raideur avec une raideur mécanique en traction Kt qui est fortement supérieure à leur raideur mécanique en compression Kc.

Par ailleurs, dans le premier mode de réalisation des figures 1 à 4, les câbles 8 présentent une répartition particulière tout autour de l'axe X-X de la roue avec une première double rangée de n câbles dont les extrémités intérieures respectives sont positionnées du côté interne de la roue, et une seconde double rangée de m câbles dont les extrémités intérieures respectives sont positionnées du côté externe de la roue.

Plus précisément, pour chaque double rangée de câbles, les extrémités intérieures sont montées sur le moyeu en étant positionnées latéralement entre l'un des deux disques 12, 14 et le bord latéral (interne et externe) du moyeu. Le nombre n, m de câbles peut être le même pour chaque double rangée de câbles.

De plus, comme représenté sur la figure 2, chaque câble 8 est avantageusement incliné par rapport à un plan radial Pr au moyeu 4 d'un angle α compris (en valeur absolue) entre 0,1° et 45°, et de préférence égal à 10° (en valeur absolue).

En particulier, pour une même rangée de câbles, il peut être avantageux de prévoir une alternance des inclinaisons entre câbles adjacents (l'un des câbles aurait un angle d'inclinaison α positif - noté « α+» sur la figure 2 - et le câble adjacent aurait un angle d'inclinaison α négatif - noté « α- » sur la figure 2).

De même, comme représenté sur la figure 4, chaque câble 8 est avantageusement incliné par rapport à un plan transversal Pt au moyeu 4 d'un angle β compris entre 0,1° et 45° (en valeur absolue), et de préférence égal à 10° (en valeur absolue).

En particulier, pour chacune des deux doubles rangés de câbles, il peut être avantageux de prévoir que tous les câbles appartenant à l'une des deux rangées présentent un angle d'inclinaison β positif (noté « β+ » sur la figure 4) et tous les câbles appartenant à l'autre des deux rangées présentent un angle d'inclinaison β négatif (noté « β- » sur la figure 4).

Ces inclinaisons α, β des câbles 8 permettent d'augmenter la rigidité de la roue lorsqu'elle est sollicitée latéralement (par exemple dans un virage) ou lorsque le véhicule équipé d'une telle roue freine.

Dans le premier mode de réalisation des figures 1 à 4, les organes élastiques par l'intermédiaire desquels l'extrémité intérieure 8b respective des câbles 8 est fixée sur le moyeu 4 sont des ressorts à lame 18. Ces ressorts à lame 18 permettant de moduler la raideur radiale des câbles.

Plus précisément, chaque ressort à lame 18 présente une forme de plaque allongée qui s'étend longitudinalement selon une direction circonférentielle au moyeu 4 et qui est fixée en son centre par un rivet 19 contre une surface intérieure 4a du moyeu.

De plus, chaque ressort à lame 18 comprend deux extrémités longitudinales 20, 22 opposées qui sont chacune reliée à l'extrémité intérieure 8b d'un câble 8. Ainsi, dans ce mode de réalisation, deux câbles adjacents partagent le même organe élastique 18 permettant de moduler leur raideur radiale.

Compte-tenu de la répartition particulière des câbles 8 en deux rangées espacées l'une de l'autre selon l'axe longitudinal X-X de la roue, il est donc prévu n/2 ressorts à lame qui sont fixés contre la surface intérieure 4a du moyeu du côté interne de la roue, et m/2 ressorts à lame qui sont fixés contre la surface intérieure du moyeu du côté externe de la roue.

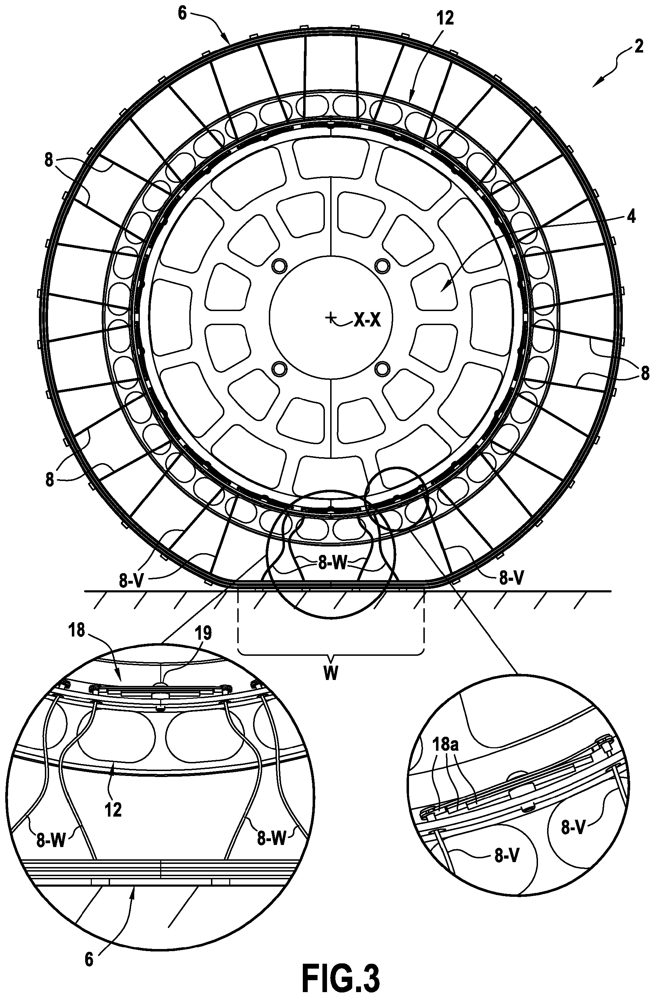

Par ailleurs, comme représenté sur les figures 2 et 3, les ressorts à lame 8 de ce premier mode de réalisation se composent chacun d'une superposition d'une pluralité (par exemple au nombre de 3) de lames 18a métalliques, par exemple en acier. La superposition de lames a comme avantage de permettre un déplacement (flèche) important sans atteindre la limite élastique de chacune des lames. En d'autres termes, il est possible de dimensionner la raideur de flexion pour atteindre la valeur voulue sans plastifier les lames élémentaires.

On notera que, dans ce premier mode de réalisation, la surface intérieure 4a du moyeu 4 forme une butée apte à limiter la déformation vers l'extérieur des lames à ressort 18.

Comme représenté sur la figure 3, la structure particulière de la roue selon l'invention permet à la partie W de la bande lamifiée 6 qui vient en contact avec le sol de se déformer lorsque la roue 2 est soumise à une charge, non pas sous une forme essentiellement circulaire, mais sous une forme épousant la surface du sol. En particulier, la structure de la bande lamifiée permet de pouvoir générer une pression de contact uniforme au sol.

Les câbles 8-W qui se situent angulairement au niveau de la partie W de la bande lamifiée 6 qui est en contact avec le sol se compriment et flambent facilement du fait de leur faible raideur mécanique en compression Kc.

Les câbles 8-V qui se situent angulairement juste en amont et juste en aval de la partie W de la bande lamifiée 6 qui est en contact avec le sol subissent également une forte traction qui est reprise par les ressorts à lame 18 sur lesquels leur extrémité extérieure 8a respective est fixée (les lames à ressort associées à ces câbles 8-V se déforment vers l'extérieur du moyeu).

Lorsque la surface du sol présente un obstacle important (par exemple un rocher), la partie W de la bande lamifiée 6 qui est en contact avec le sol continue à se déformer pour épouser le profil de l'obstacle. Dans une telle situation, en fonction de la taille de l'obstacle, la surface intérieure de la bande lamifiée 6 peut venir en butée contre le diamètre extérieur des disques 12, 14 portés par le moyeu 4 afin de limiter les déformations subies par la bande lamifiée.

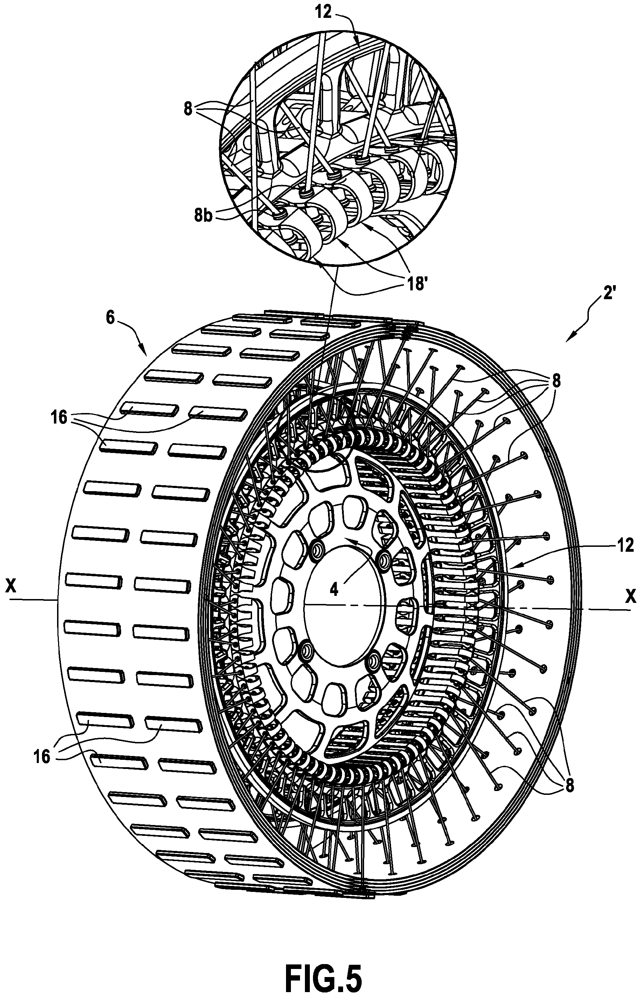

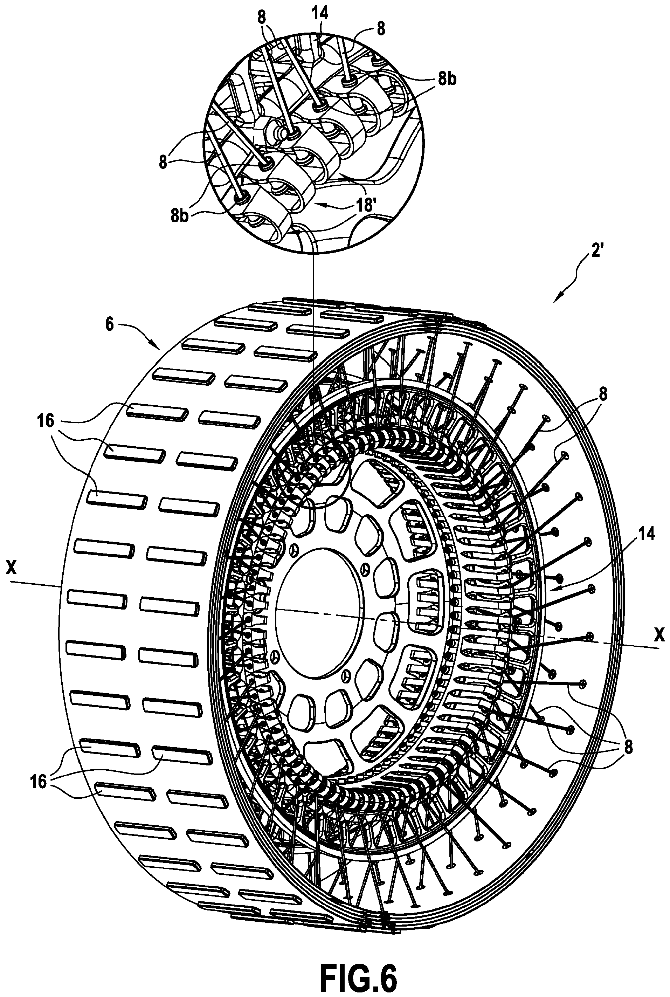

En liaison avec les figures 5 à 9, on décrira maintenant une roue 2' selon un second mode de réalisation.

Ce second mode de réalisation se distingue du précédent par les organes élastiques par l'intermédiaire desquels l'extrémité intérieure 8b respective des câbles 8 est fixée sur le moyeu 4.

Dans ce mode de réalisation, ces organes élastiques se présentent sous la forme de lames 18' pliées en U (c'est-à-dire à 180°) formant des ressorts permettant de moduler la raideur radiale des câbles.

Les lames 18' sont réalisées en métal, par exemple en acier, ou en matériau composite. Elles présentent une raideur en flexion qui est comprise entre 200 N/mm et 1 N/mm, et de façon préférentielle entre 70 N/mm et 5 N/mm (ces valeurs de raideur en flexion ont été obtenues au moyen d'une machine d'essais de la marque « INSTRON^{®} », modèle 34TM-10).

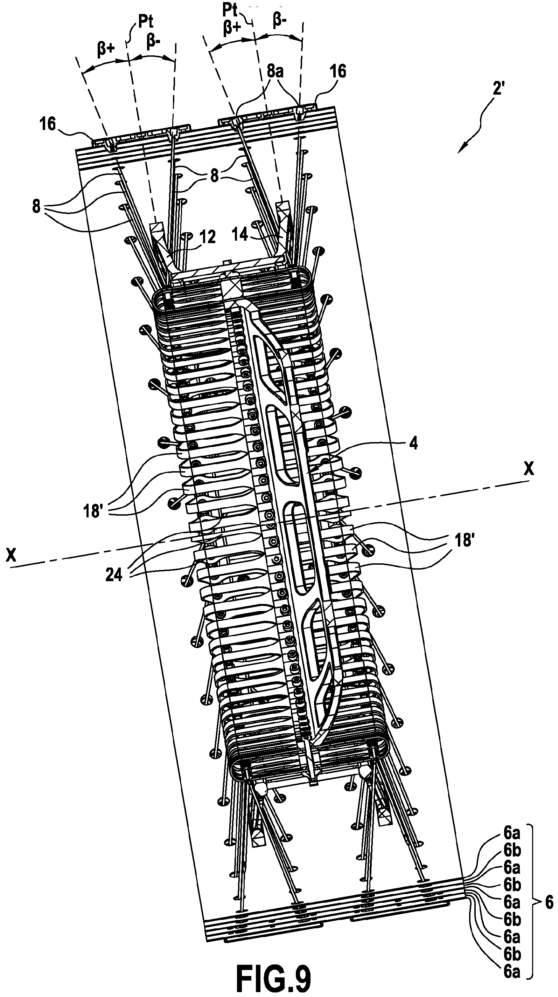

Plus précisément, les lames 18' pliées en U sont fixées au niveau de leurs extrémités libres respectives contre la surface intérieure 4a du moyeu 4 par l'intermédiaire d'un système vis/écrou 24 (voir la figure 9) et s'étendent longitudinalement selon une direction axiale du moyeu (c'est-à-dire selon l'axe longitudinal X-X de la roue).

Par ailleurs, chaque lame 18' pliée en U est reliée, au niveau de son extrémité opposée à ses extrémités libres, à l'extrémité intérieure de l'un des câbles 8. Ainsi, contrairement au mode de réalisation précédent, il est prévu autant de lames 18' pliées en U qu'il y a de câbles métalliques.

Dans une variante de réalisation non représentée, les lames pliées en U sont regroupées par groupes de plusieurs lames (entre 2 et 10 par exemple, et de préférence au nombre de 4) qui sont reliées entre elles dans la partie centrale de la roue de façon à garantir un bon alignement des lames entre elles (et éviter ainsi une rotation des lames autour de leur point de fixation sur la roue).

Compte-tenu de la répartition particulière des câbles 8 en deux rangées espacées l'une de l'autre selon l'axe longitudinal X-X de la roue 2', il est prévu n lames 18' pliées en U qui sont fixés contre la surface intérieure 4a du moyeu du côté interne de la roue, et m lames 18' pliées en U qui sont fixés contre la surface intérieure du moyeu du côté externe de la roue.

Les lames pliées en U qui sont fixés du côté interne de la roue s'étendent longitudinalement (c'est-à-dire parallèlement à l'axe longitudinal X-X de la roue) vers l'intérieur de la roue, et les lames pliées en U qui sont fixés du côté externe de la roue s'étendent longitudinalement vers l'extérieur de la roue.

Par ailleurs, comme pour le mode de réalisation précédent, les câbles 8 présentent une répartition particulière tout autour de l'axe X-X de la roue 2' avec une première double rangée de n câbles dont les extrémités intérieures 8b respectives sont fixées aux lames pliées en U positionnées du côté interne de la roue, et une seconde double rangée de m câbles dont les extrémités intérieures respectives sont fixées aux lames pliées en U positionnées du côté externe de la roue.

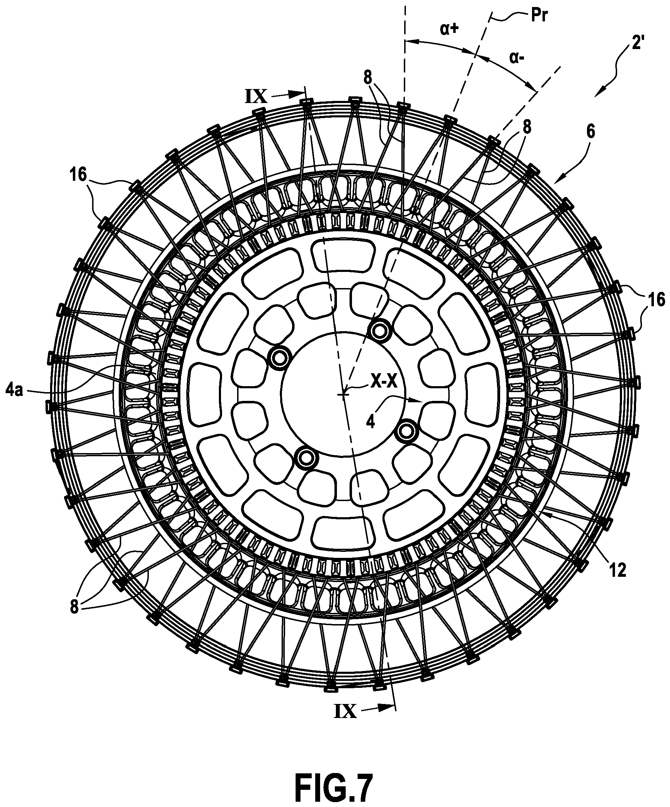

De même, dans ce second mode de réalisation, comme représenté sur les figures 7 et 9, chaque câble 8 est avantageusement incliné par rapport à un plan radial Pr au moyeu d'un angle α compris entre 0,1° et 45° (en valeur absolue) et/ou par rapport à un plan transversal Pt au moyeu d'un angle β compris entre 0,1° et 45° (en valeur absolue).

Pour chacune des deux doubles rangés de câbles, il est avantageux de prévoir que tous les câbles appartenant à la même rangée présentent un angle d'inclinaison α par rapport à un plan radial qui est positif (noté « α+ » sur la figure 7), et que tous les câbles appartenant à l'autre rangée présentent un angle d'inclinaison α par rapport à un plan radial qui est négatif (noté « α- » sur la figure 7).

De façon similaire, pour chacune des deux doubles rangés de câbles, il peut être avantageux de prévoir que tous les câbles appartenant à l'une des deux rangées présentent un angle d'inclinaison β par rapport à un plan transversal qui est positif (noté « β+ » sur la figure 9) et tous les câbles appartenant à l'autre des deux rangées présentent un angle d'inclinaison β par rapport à un plan transversal qui est négatif (noté « β- » sur la figure 9).

Dans ce second mode de réalisation, le moyeu 4 porte également deux disques 12, 14 faisant saillie radialement vers l'extérieur. Chacun de ces deux disques présente un diamètre intérieur contre lequel les lames 18' pliées en U sont aptes à venir en butée afin de limiter leur déformation.

De même, comme pour le premier mode de réalisation, chacun des deux disques 12, 14 présente un diamètre extérieur contre lequel la surface intérieure de la bande lamifiée 6 est apte à venir en butée afin de limiter les déformations de celle-ci.

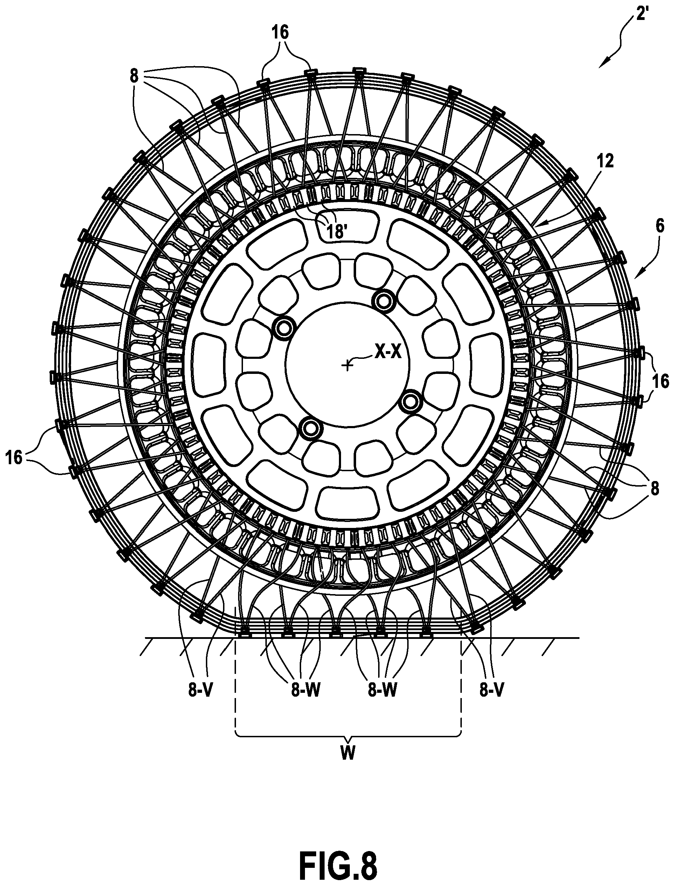

On notera également que le comportement mécanique de la structure particulière de cette roue 2' selon ce second mode de réalisation est identique à celui relatif au premier mode de réalisation. En particulier, comme représenté sur la figure 8, lorsque la roue 2' est soumise à une charge, la structure particulière de la roue selon l'invention permet à la partie W de la bande lamifiée 6 qui vient en contact avec le sol de se déformer, non pas sous une forme essentiellement circulaire, mais sous une forme épousant la surface du sol.

Les câbles 8-W qui se situent angulairement au niveau de la partie W de la bande lamifiée 6 qui est en contact avec le sol se compriment et flambent facilement du fait de leur faible raideur mécanique en compression Kc.

Quant aux câbles 8-V qui se situent angulairement juste en amont et juste en aval de la partie W de la bande lamifiée 6 qui est en contact avec le sol subissent une forte traction qui est reprise par les lames 18' pliées en U sur lesquels leur extrémité extérieure 8a respective est fixée (les lames à ressort associées à ces câbles 8-V se déforment vers l'extérieur du moyeu).

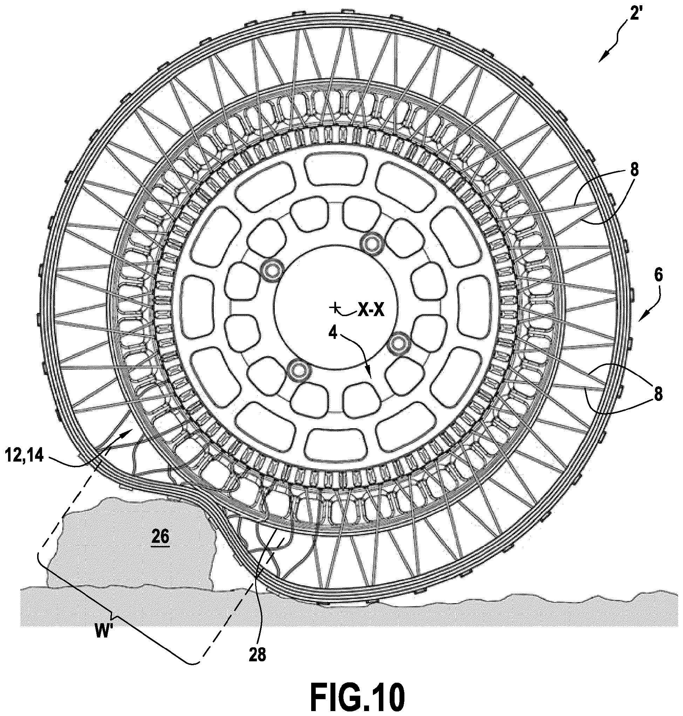

Par ailleurs, comme représenté sur la figure 10, lorsque la surface du sol présente un obstacle important (par exemple un rocher 26), la partie W' de la bande lamifiée 6 de la roue 2' qui roule sur l'obstacle continue à se déformer pour épouser le profil de l'obstacle.

Dans une telle situation, en fonction de la taille de l'obstacle, la surface intérieure de la bande lamifiée 6 peut venir en butée contre le diamètre extérieur des disques 12, 14 portés par le moyeu 4 afin de limiter les déformations subies par la bande lamifiée.

De plus, afin d'assouplir le contact de la bande lamifiée avec les disques 12, 14, il peut être avantageux que le diamètre extérieur de ces derniers soit muni d'une bande en lamifié d'assouplissement 28 (par exemple métal/élastomère).

## Revendications

1. Roue (2 ; 2') déformable à support de charge non-pneumatique destinée à équiper un véhicule pour rouler en conditions extrêmes comme celles rencontrées sur la lune et sur Mars, comprenant :
- un moyeu (4), et
- une bande annulaire lamifiée (6) destinée à être en contact avec le sol, positionnée autour du moyeu qui lui est concentrique et comprenant une pluralité de viroles (6a) concentriques qui sont assemblées avec interposition de couches d'interposition (6b),
**caractérisée en ce que** :
- les couches d'interposition sont composées chacune d'un matériau dont le module de Young est de 600000 à 1000 fois inférieur à celui des viroles, et **en ce que**
- la roue comprend en outre une pluralité de câbles (8) métalliques dont le diamètre externe est compris entre 0,2 mm et 5 mm, chaque câble reliant radialement le moyeu (4) à la bande lamifiée (6) en étant fixé, d'une part par une extrémité extérieure (8a) à la bande lamifiée, et d'autre part par une extrémité intérieure (8b) au moyeu par l'intermédiaire d'un organe élastique (18 ; 18') permettant de moduler la raideur radiale des câbles, chaque organe élastique étant associé à une butée (12, 14) apte à limiter sa déformation.

2. Roue selon la revendication 1, dans laquelle les viroles (6a) de la bande lamifiée (6) sont réalisées en métal ou en matériau composite.

3. Roue selon l'une des revendications 1 et 2, dans laquelle les couches d'interposition (6b) de la bande lamifiée (6) sont composées d'un élastomère hyperélastique ayant une température de transition vitreuse inférieure à 120°C.

4. Roue selon l'une quelconque des revendications 1 à 3, dans laquelle les câbles (8) possèdent un rapport entre leur raideur mécanique en traction (Kt) et leur raideur mécanique en compression (Kc) qui est compris entre 50000 et 300000.

5. Roue selon la revendication 4, dans laquelle le rapport entre la raideur mécanique en traction (Kt) et la raideur mécanique en compression (Kc) des câbles (8) est compris entre 25000 et 150000 suivant les recommandations des normes ISO 2408 :2017 et ISO 17893 :2004.

6. Roue selon l'une quelconque des revendications 1 à 5, dans laquelle chaque câble (8) est incliné par rapport à un plan radial (Pr) au moyeu d'un angle (α) compris entre 0,1° et 45° et/ou par rapport à un plan transversal (Pt) au moyeu d'un angle (β) compris entre 0,1° et 45°.

7. Roue selon la revendication 6, dans laquelle chaque câble (8) est incliné par rapport à un plan radial (Pr) au moyeu d'un angle (α) de 10° et/ou par rapport à un plan transversal (Pt) au moyeu d'un angle (β) de 10°.

8. Roue selon l'une quelconque des revendications 1 à 7, dans laquelle l'extrémité extérieure (8a) des câbles (8) est fixée sur des baguettes (16) montées contre une surface extérieure de la bande lamifiée (6).

9. Roue selon l'une quelconque des revendications 1 à 8, dans laquelle l'extrémité intérieure (8b) des câbles (8) est fixée au moyeu (4) par l'intermédiaire de ressorts à lame (18) permettant de moduler leur raideur radiale.

10. Roue selon la revendication 9, dans laquelle les ressorts à lame (18) sont fixés au niveau de leur centre respectif contre une surface intérieure (4a) du moyeu (4) formant la butée apte à limiter leur déformation et s'étendent longitudinalement selon une direction circonférentielle au moyeu, chaque ressort à lame comprenant deux extrémités longitudinales (20, 22) opposées qui sont chacune reliée à l'extrémité intérieure (8b) d'un câble (8).

11. Roue selon la revendication 10, comprenant une pluralité de ressorts à lame qui sont fixés contre la surface intérieure du moyeu du côté interne de la roue, et une pluralité de ressorts à lame qui sont fixés contre la surface intérieure du moyeu du côté externe de la roue.

12. Roue selon l'une quelconque des revendications 9 à 11, dans laquelle chaque ressort à lame (18) comprend une pluralité de lames (18a) en acier inoxydable qui sont superposées les unes aux autres.

13. Roue selon l'une quelconque des revendications 9 à 12, dans laquelle le moyeu (4) porte au moins un disque (12, 14) faisant saillie radialement vers l'extérieur et ayant un diamètre extérieur contre lequel la surface intérieure de la bande lamifiée (6) est apte à venir en butée afin de limiter les déformations de celle-ci.

14. Roue selon l'une quelconque des revendications 1 à 8, dans laquelle l'extrémité intérieure (8b) des câbles (8) est fixée au moyeu par l'intermédiaire de lames (18') pliées en U formant un ressort permettant de moduler la raideur radiale des câbles.

15. Roue selon la revendication 14, dans laquelle les lames (18') pliées en U sont fixées au niveau de leurs extrémités libres respectives contre une surface intérieure (4a) du moyeu (4) et s'étendent longitudinalement selon une direction axiale du moyeu, chaque lame pliée en U étant reliée à l'extrémité intérieure (8b) d'un câble (8).

16. Roue selon la revendication 15, comprenant une pluralité de lames pliées en U qui s'étendent longitudinalement du côté interne de la roue, et une pluralité de lames pliées en U qui s'étendent longitudinalement du côté externe de la roue.

17. Roue selon l'une quelconque des revendications 14 à 16, dans laquelle le moyeu (4) porte au moins un disque (12, 14) faisant saillie radialement vers l'extérieur et ayant un diamètre intérieur contre lequel les lames (18') pliées en U sont aptes à venir en butée afin de limiter leur déformation, et un diamètre extérieur contre lequel la surface interne de la bande lamifiée est apte à venir en butée afin de limiter les déformations de celle-ci.

## Patentansprüche

1. Verformbares Rad (2; 2') mit nicht pneumatischer Lastaufnahme, das ausgelegt ist, um ein Fahrzeug auszustatten, um unter extremen Bedingungen wie denjenigen, die auf dem Mond oder dem Mars anzutreffen sind, zu fahren, umfassend:
- eine Nabe (4), und
- ein ringförmiges laminiertes Band (6), das ausgelegt ist, um mit dem Boden in Kontakt zu sein, das um die Nabe positioniert ist, die konzentrisch damit ist, und umfassend eine Vielzahl von konzentrischen Zwingen (6a), die durch Einfügen von Zwischenschichten (6b) zusammengebaut sind,
**dadurch gekennzeichnet, dass**:
- die Zwischenschichten jeweils aus einem Material zusammengesetzt sind, dessen Young'sches Modul 600000 bis 1000 Mal kleiner als dasjenige der Zwingen ist, und dadurch, dass
- das Rad außerdem eine Vielzahl von metallischen Kabeln (8) umfasst, deren äußerer Durchmesser im Bereich zwischen 0,2 mm und 5 mm liegt, wobei jedes Kabel radial die Nabe (4) mit dem laminierten Band (6) verbindet und gelichzeitig einerseits durch ein äußeres Ende (8a) an das laminierte Band und andererseits durch ein inneres Ende (8b) an die Nabe mit Hilfe eines elastischen Organs (18; 18') fixiert ist, das ermöglicht, die radiale Starrheit der Kabel zu modulieren, wobei jedes elastische Organ einem Anschlag (12, 14) zugewiesen ist, der ausgelegt ist, um seine Verformung zu begrenzen.

2. Rad nach Anspruch 1, wobei die Zwingen (6a) des laminierten Bands (6) aus Metall oder aus Verbundmaterial hergestellt sind.

3. Rad nach einem der Ansprüche 1 und 2, wobei die Zwischenschichten (6b) des laminierten Bands (6) aus einem hyperelasischen Elastomer mit einer Glasübergangstemperatur von weniger als 120 °C zusammengesetzt sind.

4. Rad nach einem der Ansprüche 1 bis 3, wobei die Kabel (8) einen Zusammenhang zwischen ihrer mechanischen Zugsteifigkeit (Kt) und ihrer mechanischen Kompressionssteifigkeit (Kc) aufweisen, der im Bereich zwischen 50000 und 300000 liegt.

5. Rad nach Anspruch 4, wobei der Zusammenhang zwischen der mechanischen Zugsteifigkeit (Kt) und der mechanischen Kompressionssteifigkeit (Kc) der Kabel (8) im Bereich zwischen 25000 und 150000 liegt, gemäß den Empfehlungen der Normen ISO 2408 :2017 und ISO 17893 :2004.

6. Rad nach einem der Ansprüche 1 bis 5, wobei jedes Kabel (8) mit Bezug auf eine radiale Ebene (Pr) zur Nabe um einen Winkel (α) geneigt ist, der im Bereich zwischen 0,1° und 45° liegt, und/oder mit Bezug auf eine quer liegende Ebene (Pt) zur Nabe um einen Winkel (β), der zwischen 0,1° und 45° liegt.

7. Rad nach Anspruch 6, wobei jedes Kabel (8) mit Bezug auf eine radiale Ebene (Pr) zur Nabe um einen Winkel (α) von 10° und/oder mit Bezug auf eine quer liegende Ebene (Pt) zur Nabe um einen Winkel (β) von 10° geneigt ist.

8. Rad nach einem der Ansprüche 1 bis 7, wobei das äußere Ende (8a) der Kabel (8) auf Stangen (16) fixiert ist, die gegen eine äußere Fläche des laminierten Bands (6) montiert sind.

9. Rad nach einem der Ansprüche 1 bis 8, wobei das innere Ende (8b) der Kabel (8) an die Nabe (4) mit Hilfe von Blattfedern (18) fixiert ist, die ermöglichen, ihre radiale Starrheit zu modulieren.

10. Rad nach Anspruch 9, wobei die Blattfedern (18) auf der Ebene ihres Zentrums bzw. gegen eine innere Fläche (4a) der Nabe (4) fixiert sind, die einen Anschlag bildet, der ausgelegt ist, um ihre Verformung zu begrenzen, und sich der Länge nach in einer Umfangsrichtung zur Nabe erstreckt, wobei jede Blattfeder zwei einander gegenüberliegende längs gerichtete Ende (20, 22) umfasst, die jeweils mit dem inneren Ende (8b) eines Kabels (8) verbunden sind.

11. Rad nach Anspruch 10, umfassend eine Vielzahl von Blattfedern, die gegen die innere Fläche der Nabe der inneren Seite des Rads fixiert sind, und eine Vielzahl von Blattfedern, die gegen die innere Fläche der Nabe der äußeren Seite des Rads fixiert sind.

12. Rad nach einem der Ansprüche 9 bis 11, wobei jede Blattfeder (18) eine Vielzahl von Blättern (18a) aus rostfreiem Stahl umfasst, die übereinandergelegt sind.

13. Rad nach einem der Ansprüche 9 bis 12, wobei die Nabe (4) mindestens eine Scheibe (12, 14) trägt, die radial nach außen vorspringt und einen Außendurchmesser aufweist, gegen den die innere Fläche des laminierten Bands (6) ausgelegt ist, um in Anschlag zu kommen, um die Verformungen derselben zu begrenzen.

14. Rad nach einem der Ansprüche 1 bis 8, wobei das innere Ende (8b) der Kabel (8) an die Nabe mit Hilfe von Blättern (18') fixiert ist, die zu einem U gebogen sind und eine Feder bilden, die ermöglicht, die Starrheit der Kabel zu modifizieren.

15. Rad nach Anspruch 14, wobei die Blätter (18'), die zu einem U gebogen sind, auf der Ebene ihrer jeweiligen freien Enden gegen eine innere Fläche (4a) der Nabe (4) fixiert sind und sich der Länge nach in einer axialen Richtung zur Nabe erstrecken, wobei jedes Blatt, das zu einem U gebogen ist, mit dem inneren Ende (8b) eines Kabels (8) verbunden ist.

16. Rad nach Anspruch 15, umfassend eine Vielzahl von Blättern, die zu einem U gebogen sind, die sich der Länge nach von der inneren Seite des Rads erstrecken, und eine Vielzahl von Blättern, die zu einem U gebogen sind, das sich der Länge nach von der äußeren Seite des Rads erstrecken.

17. Rad nach einem der Ansprüche 14 bis 16, wobei die Nabe (4) mindestens eine Scheibe (12, 14) trägt, die radial nach innen vorspringt und einen Innendurchmesser aufweist, gegen den die Blätter (18'), die zu einem U gebogen sind, ausgelegt sind, um in Anschlag zu kommen, um ihre Verformung zu begrenzen, und einen Außendurchmesser aufweist, gegen den die innere Fläche des laminierten Bands ausgelegt ist, um in Anschlag zu kommen, um die Verformungen derselben zu begrenzen.

## Claims

1. A deformable wheel (2; 2') with non-pneumatic load bearing intended to equip a vehicle for rolling under extreme conditions such as those encountered on the moon and on Mars, comprising:
- a hub (4),
- a laminated annular strip (6) intended to be in contact with the soil, positioned around the hub which is concentric therewith and comprising a plurality of concentric ferrules (6a) which are assembled with interposition of interposing layers (6b),
**characterized in that**:
- the interposing layers are each composed of a material whose Young's modulus is 600,000 to 1,000 times lower than that of the ferrules, and **in that**
- the wheel further comprises a plurality of metal cables (8) whose outer diameter is comprised between 0.2 mm and 5 mm, each cable radially connecting the hub (4) to the laminated strip (6) while being fixed, on the one hand by a external end (8a) to the laminated strip, and on the other hand by an internal end (8b) to the hub by means of an elastic member (18; 18') making it possible to modulate the radial stiffness of the cables, each elastic member being associated with an abutment (12, 14) able to limit its deformation.

2. The wheel according to claim 1, wherein the ferrules (6a) of the laminated strip (6) are made of metal or of composite material.

3. The wheel according to any of claims 1 and 2, wherein the interposing layers (6b) of the laminated strip (6) are composed of a hyperelastic elastomer having a glass transition temperature below 120°C.

4. The wheel according to any one of claims 1 to 3, wherein the cables (8) have a ratio between their tensile mechanical stiffness (Kt) and their compressive mechanical stiffness (Kc) which is comprised between 50,000 and 300,000.

5. The wheel according to claim 4, wherein the ratio between the tensile mechanical stiffness (Kt) and the compressive mechanical stiffness (Kc) of the cables (8) is comprised between 25,000 and 150,000 according to the recommendations of the ISO 2408:2017 and ISO 17893:2004 standards.

6. The wheel according to any one of claims 1 to 5, wherein each cable (8) is inclined with respect to a plane (Pr) radial to the hub by an angle (α) comprised between 0.1° and 45° and/or with respect to a plane transverse to the hub (Pt) by an angle (β) comprised between 0.1° and 45°.

7. The wheel according to claim 6, wherein each cable (8) is inclined with respect to a plane (Pr) radial to the hub by an angle (α) of 10° and/or with respect to a plane (Pt) transverse to the hub by an angle (β) of 10°.

8. The wheel according to any one of claims 1 to 7, wherein the external end (8a) of the cables (8) is fixed on rods (16) mounted against an external surface of the laminated strip (6).

9. The wheel according to any one of claims 1 to 8, wherein the internal end (8b) of the cables (8) is fixed to the hub (4) by means of leaf springs (18) making it possible to modulate their radial stiffness.

10. The wheel according to claim 9, wherein the leaf springs (18) are fixed at the level of their respective center against an internal surface (4a) of the hub (4) forming the abutment able to limit their deformation and extend longitudinally along a direction circumferential to the hub, each leaf spring comprising two opposite longitudinal ends (20, 22) which are each connected to the internal end (8b) of a cable (8).

11. The wheel according to claim 10, comprising a plurality of leaf springs which are fixed against the internal surface of the hub on the inner side of the wheel, and a plurality of leaf springs which are fixed against the internal surface of the hub on the outer side of the wheel.

12. The wheel according to any one of claims 9 to 11, wherein each leaf spring (18) comprises a plurality of stainless steel leaves (18a) which are superimposed on each other.

13. The wheel according to any one of claims 9 to 12, wherein the hub (4) carries at least one disk (12, 14) protruding radially outwards and having an outer diameter against which the internal surface of the laminated strip (6) is able to come into abutment in order to limit its deformations.

14. The wheel according to any one of claims 1 to 8, wherein the internal end (8b) of the cables (8) is fixed to the hub by means of U-bent leaves (18') forming a spring making it possible to modulate the radial stiffness of the cables.

15. The wheel according to claim 14, wherein the U-bent leaves (18') are fixed at their respective free ends against an internal surface (4a) of the hub (4) and extend longitudinally along an axial direction of the hub, each U-bent leaf being connected to the internal end (8b) of a cable (8).

16. The wheel according to claim 15, comprising a plurality of U-bent leaves which extend longitudinally on the inner side of the wheel, and a plurality of U-bent leaves which extend longitudinally on the outer side of the wheel.

17. The wheel according to any one of claims 14 to 16, wherein the hub (4) carries at least one disk (12, 14) protruding radially outwards and having an inner diameter against which the U-bent leaves (18') are able to come into abutment in order to limit their deformation, and an outer diameter against which the inner surface of the laminated strip is able to come into abutment in order to limit its deformations.
